(19) Europäisches Patentamt
European Patent Office
Office européen des brevets

(11) **EP 3 008 138 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(51) Int Cl.:
*C09D 4/06* (2006.01)      *C09D 125/00* (2006.01)
*C09D 133/00* (2006.01)     *C09D 155/00* (2006.01)

(21) Anmeldenummer: **14730830.8**

(22) Anmeldetag: **11.06.2014**

(86) Internationale Anmeldenummer:
**PCT/EP2014/062060**

(87) Internationale Veröffentlichungsnummer:
**WO 2014/198740 (18.12.2014 Gazette 2014/51)**

(54) **OILING-ARME, KRATZFESTE UND LÖSEMITTELBESTÄNDIGE POLYCARBONAT-FOLIE**

LOW-OILING, SCRATCH-RESISTANT, AND SOLVENT-RESISTANT POLYCARBONATE FILM

FEUILLE DE POLYCARBONATE À FAIBLE EFFET DE MOIRÉ, RÉSISTANT AUX RAYURES ET RÉSISTANT AUX SOLVANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2013 EP 13172191**

(43) Veröffentlichungstag der Anmeldung:
**20.04.2016 Patentblatt 2016/16**

(73) Patentinhaber: **Covestro Deutschland AG 51373 Leverkusen (DE)**

(72) Erfinder:
• **KOSTROMINE, Serguei**
  **53913 Swisttal-Buschhoven (DE)**
• **PETZOLDT, Joachim**
  **40789 Monheim (DE)**

(74) Vertreter: **Levpat
c/o Covestro AG
Gebäude 4825
51365 Leverkusen (DE)**

(56) Entgegenhaltungen:
**US-A1- 2004 192 804    US-A1- 2009 163 614
US-A1- 2011 171 476    US-A1- 2012 288 706**

EP 3 008 138 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung gemäß Ansprüche 1 bis 15 betrifft ein Beschichtungsmittel zum Herstellen von oiling-armen, kratzfesten und lösemittelbeständigen Beschichtungen auf insbesondere Polycarbonat-Folien. Des Weiteren betrifft die vorliegende Erfindung einen Schichtkörper, umfassend ein Substrat und eine aus dem Beschichtungsmittel erhältliche Beschichtung sowie die Verwendung der Schichtkörper zur Herstellung von Kunststoffteilen im film insert molding-Verfahren.

Für die Herstellung von Kunststoffteilen im Spritzgussverfahren hat sich die Film-Insert-Molding-Technologie etabliert. Sie sieht vor, dass die Frontoberfläche eines Teiles zuerst aus einer beschichteten Folie zwei- oder dreidimensional vorgefertigt wird und danach mit einer Kunststoffschmelze von der Rückseite gefüllt bzw. hinterspritzt wird.

Dabei ist es oft erwünscht, dass die Frontseite gegen chemische und mechanische Einwirkungen ausreichend geschützt ist. Dieses wird im Stand der Technik oftmals durch eine entsprechende Beschichtung oder Lackierung der Oberfläche erreicht. Um eine Nassbeschichtung der fertigen dreidimensionalen Teile zu vermeiden, ist es dabei vorteilhaft, dass eine solche Lackierung oder Beschichtung schon auf der Folie aufgebracht sein soll, welche dann mit der Folie alle weiteren Umformungsschritte durchläuft und danach endgültig ausgehärtet wird, z.B. durch UV-Belichtung. Daraus entsteht ein ganz spezielles Eigenschaftsprofil für beschichtete Folien, die zu dieser Technologie passen. Im Stand der Technik hat sich für diese Produktklasse der Begriff "*Formable Hardcoating*" durchgesetzt, nämlich eine Folienbeschichtung, die zuerst ausreichend blockfest ist, sich dann aber zusammen mit dem Substrat thermisch beliebig verformen lässt und am Ende durch UV-Härten die Eigenschaften einer Schutzschicht bekommt.

Eine solche Eigenschaftskombination im Sinne von Blockfestigkeit und thermoplastischem Verhalten der primären Beschichtung zusammen mit dem großen latenten Potential zur UV-Vernetzung ist schwer zu realisieren.

Die meisten Lösungsansätze für diese Aufgabenstellung im Stand der Technik umfassen den Einsatz von Makromonomeren, die hauptsächlich durch *Dual-Cure*-Verfahren hergestellt werden, wie es unter anderem beschrieben ist in Beck, Erich (BASF), Scratch resistant UV coatings for automotive applications, Pitture e Vernici, European Coatings (2006), 82(9), 10-19; Beck, Erich, Into the third dimension: three ways to apply UV coating technology to 3D-automotive objects, European Coatings Journal (2006), (4), 32, 34, 36, 38-39; Petzoldt, Joachim; Coloma, Fermin (BMS), New three-dimensionally formable hardcoat films, JOT, Journal fuer Oberflaechentechnik (2010), 50(9), 40-42; EP 2113527 A1, Petzoldt et al., Development of new generation hardcoated films for complex 3D-shaped FIM applications, RadTech Asia 2011, Conference Proceedings.

Nach dem Hinterspritzen dieser Folienprodukte mit beispielsweise Polycarbonat-Schmelze (*Film insert Molding*) entstehen die gewünschten Kunststoffteile.

An das optische Erscheinungsbild solcher Kunststoffteile, die im Auto, in jeglichen anderen Transportmitteln, Elektro- und Elektronikgeräten und in der Bauindustrie einen breiten Einsatz finden, werden hohe Anforderungen gestellt. Irreguläre Regenbogenphänomene, die oft als sogenanntes "Oiling" bezeichnet werden, zerstören den gewünschten optischen Eindruck. Besonders schwer fällt dieser unerwünschte Effekt ins Auge, wenn Kunststoffteile in glänzendem Piano-Schwarz dargestellt werden sollen.

Der "Oiling"-Effekt entsteht durch Interferenz zweier in eine Richtung reflektierten Lichtstrahlen, wobei ein Strahl an der Grenzfläche Luft-Beschichtung reflektiert wird, während der andere Strahl an der darunter liegenden Grenzfläche Beschichtung-Substratfolie reflektiert wird. Je mehr Licht von beiden Flächen reflektiert wird, desto sichtbarer kann der Effekt werden. Glänzende Lackierungen glänzender Substrate sind eine Voraussetzung für starkes Oiling. Genau dieser Fall tritt ein, wenn beispielsweise eine glatte Polycarbonatfolie (wie sie zum Beispiel unter dem Markennamen Makrofol DE 1-1 vom Hersteller Bayer MaterialScience AG vertrieben wird) mit einem glänzendem Klarlack überdeckt wird.

In einer solchen Anwendung werden oft glatte Polycarbonat-Folien mit einem relativ hohen Brechungsindex von ca. 1,58 verwendet, welche in der Regel mit einem Aliphaten-basierten Lack mit einem niedrigeren Brechungsindex in einer anwendungsrelevanten Schichtstärke zwischen 5 und 20 $\mu$m beschichtet werden. Durch thermische Verformung wird die Schichtdicke der Beschichtung auch ortsabhängig auf dem Bauteil variiert, was insgesamt die Ausbildung eines Regenbogeneffekts auf dem Bauteil begünstigen kann.

Es ist bekannt, dass die Interferenz von der Dicke der Beschichtung abhängig ist und die Interferenz wellenlängenabhängig auftritt. Das bedeutet, dass das Spiel der nebeneinander erscheinenden Regenbogen-Farben dann besonders sichtbar wird, wenn in der Beschichtung keilförmige Schichtstärke-Variationen auftreten. Genau das passiert aber, wenn die beschichtete Folie thermisch verformt und dabei stellenweise in die Länge gezogen bzw. verstreckt wird. Der ausgewählte Herstellungsprozess selber schafft also die günstigsten Bedingungen für den unerwünschten Regenbogeneffekt.

Die Reflektionsintensität hängt dabei nicht nur von der Güte der Fläche ab, sondern auch von der Brechungsindex-Differenz der zwei Medien, die diese Grenzfläche bilden. Die vordere Grenzfläche zwischen Lack und Luft kann wenig beeinflusst werden. Die Reflexion von der Grenzfläche zwischen Lack und Substratfolie kann dadurch minimiert werden, dass der Brechungsindex des Lackes dem Brechungsindex des als Substratfolie verwendeten Polycarbonates möglichst nahe angepasst wird. So hat beispielsweise eine Polycarbonatfolie auf Basis von Bisphenol-A einen Brechungsindex von 1,585 (Natrium-D-linie von 589 nm).

US 2012/288706, US 2011/171476, US 2009/163614 und US 2009/163614 beschreiben Beschichtungszusammensetzungen enthaltend thermoplastische Polymere und Reaktivverdünner-Monomere, Fotoinitiatoren und Lösungsmittel.

Es wurde überraschenderweise festgestellt, dass eine thermisch verformbare und danach UV-härtbare "oiling"-arme Beschichtung realisiert wird, wenn ein Beschichtungsmittel, umfassend bestimmte Anteile mindestens eines Styrol-Acrylonitril-Copolymeren, mindestens eines Reaktivverdünners, mindestens eines Fotoinitiators in mindestens einem gemeinsamen Lösungsmittel verwendet wird.

Die vorliegende Erfindung gemäß Ansprüche 1 bis 8 stellt daher folgendes bereit: Ein Beschichtungsmittel, umfassend

> (a) mindestens ein Styrol-Acrylonitril-Copolymer in einem Gehalt von mindestens 30 Gew.-% des Festanteils des Beschichtungsmittels;
> (b) mindestens 30 Gew.-% eines UV-härtbaren Reaktivverdünners;
> (c) 0,1 bis 10 Gewichtsteile mindestens eines Fotoinitiators; und
> (d) mindestens ein organisches Lösungsmittel,

wobei der Anteil an ethylenisch ungesättigten Gruppen mindestens 3 mol pro kg des Festanteils des Beschichtungsmittels beträgt.

Das erfindungsgemäße Beschichtungsmittel kann einfach und effizient erhalten werden. Darüber hinaus sind damit erhältliche Beschichtungen auf vielen Oberflächen wie insbesondere für die im Film insert molding-Verfahren in Frage kommenden Folien ausreichend blockfest, lassen sich dann aber zusammen mit dem beschichteten Substrat thermisch beliebig verformen und bekommen nach Härtung wie beispielsweise durch UV-Strahlung eine Oberfläche mit vorteilhaften Eigenschaften hinsichtlich Kratzfestigkeit, Lösemittelbeständigkeit sowie eines zumindest verringerten Oiling-Effektes.

Die Kratzfestigkeit lässt sich beispielsweise anhand der Bleistifthärte bestimmen, wie sie in Anlehnung an ASTM D 3363 gemessen werden kann. Eine Bewertung der Lösemittelbeständigkeit kann in Anlehnung an EN ISO 2812-3:2007 erfolgen. Bemerkenswert ist, dass die durch das erfindungsgemäße Beschichten der Folie mit dem Beschichtungsmittel und abschließendem Härten durch UV-Strahlung erhaltene Oberfläche des Formkörpers selbst gegenüber den sonst für Polycarbonat-Oberflächen sehr schädlichen Lösungsmitteln, wie 1-Methoxy-2-propylacetat, Xylol, Ethylacetat, Methylethylketon, eine gute Beständigkeit aufweist.

Die im erfindungsgemäßen Beschichtungsmittel eingesetzten Styrol-Acrylonitril-Copolymere sind unter der Kurzbezeichnung SAN (DIN EN ISO 1043-1 und DIN ISO 1629) bekannte Thermoplaste. Die Schmelz- bzw. Glasübergangstemperatur nach ISO 11357 liegt bei Styrol-Acrylonitril-Copolymeren über 100°C. Der Anteil des Acrylnitrils ist in erster Linie durch die Lösbarkeit in entsprechenden Lösungsmitteln begrenzt. Bis zu einem Acrylnitril-Anteil von 35 % weisen die Styrol-Acrylonitril-Copolymere eine besonders vorteilhafte Löslichkeit auf, was wiederum zu besonders vorteilhaften Eigenschaften hinsichtlich der Verarbeitbarkeit des Beschichtungsmittels und des optischen Gesamteindrucks der damit erhaltenen Beschichtungen führt. In einer bevorzugten Ausführungsform weist das Styrol-Acrylonitril-Copolymer (a) einen Acrylnitril-Anteil im Bereich von $\geq 20$ und $\leq 30$ %, besonders bevorzugt sind SAN-Copolymere mit Acrylnitril-Anteilen im Bereich von $\geq 22$ und $\leq 28$ %.

Für die vorliegenden Erfindung verwendbare SAN-Copolymere sind beispielsweise kommerziell unter verschiedenen Handelsmarken erhältlich, wie beispielsweise Luran (Hersteller Styrolution), Tyril (Hersteller Styron), Kostil (Hersteller Polymeri) und der Elix-200-Serie (Hersteller Elix Polymers). Solche Produkte sind auch als Poly-(styrol-co-acrylonitril) vom Hersteller Aldrich zu beziehen.

Das Styrol-Acrylonitril-Copolymer ist ein wesentlicher Teil des erfindungsgemäßen Beschichtungsmittels und der erfindungsgemäßen Beschichtung. Der Anteil des mindestens einen Styrol-Acrylonitril-Copolymeren beträgt im Festanteil des Beschichtungsmittels mindestens 30 Gew.-%, bevorzugt mindestens 40 Gew.-% besonders bevorzugt mindestens 45 Gew.-%.

Als Komponente (b) des erfindungsgemäßen Beschichtungsmittel sind als Reaktivverdünner bifunktionelle, trifunktionelle, tetrafunktionelle, pentafunktionelle oder hexafunktionelle Acryl- und/oder Methacrylmonomere bevorzugt einsetzbar. Vorzugsweise handelt es sich um Esterfunktionen, insbesondere Acrylesterfunktionen. Geeignete mehrfunktionelle Acryl- und/oder Methacrylsäureester leiten sich von aliphatischen Polyhydroxyverbindungen mit wenigstens 2, vorzugsweise wenigstens 3 und besonders bevorzugt wenigstens 4 Hydroxygruppen und vorzugsweise 2 bis 12 Kohlenstoffatomen ab.

Beispiele solcher aliphatischen Polyhydroxyverbindungen sind Ethylenglykol, Propylenglykol, Butandiol-1,4, Hexandiol-1,6, Diethylenglykol, Triethylenglykol, Glycerin, Trimethylolpropan, Pentaerythrit, Dipentaerythrit, Tetramethylolethan und Sorbitan. Beispiele für sich als bi- bis hexafunktionelle Acryl- und/oder Methacrylmonomere zum Reaktivverdünner erfindungsgemäß bevorzugt eignende Ester der genannten Polyhydroxyverbindungen sind Glykoldiacrylat und - dimethacrylat, Butandioldiacrylat oder -dimethacrylat, Dimethylolpropandiacrylat oder - dimethacrylat, Diethylenglykoldiacrylat oder -dimethacrylat, Divinylbenzol, Trimethylolpropantriacrylat oder -trimethacrylat, Glycerintriacrylat oder -trimethacrylat, Pentaerythrittetraacrylat oder

- tetramethacrylat, Dipentaerythritpenta/hexaacrylat (DPHA), 1,2,3,4-Butantetraol-tetraacrylat oder
- tetramethacrylat, Tetramethylolethantetraacrylat oder -tetramethacrylat, 2,2-Dihydroxy-propandiol-1,3-tetraacrylat oder -tetramethacrylat, Diurethandimethacrylat (UDMA), Sorbitantetra-, -penta- oder -hexa-acrylat oder die entsprechenden Methacrylate. Es können auch Gemische von vernetzenden Monomeren mit zwei bis vier oder mehr ethylenisch ungesättigten, radikalisch polymerisierbaren Gruppen mitverwendet werden.

Weiter erfindungsgemäß als Reaktivverdünner bzw. als Komponente b) des erfindungsgemäßen Beschichtungsmittels können alkoxylierte Di-, Tri-, Tetra-, Penta- und Hexacrylate oder - methacrylate verwendet werden. Beispiele für alkoxylierte Diacrylate oder -methacrylate sind alkoxyliertes, bevorzugt ethoxyliertes Methandioldiacrylat, Methandioldimethacrylat, Glycerindiacrylat, Glycerindimethacrylat, Neopentylglycoldiacrylat, Neopentylglycoldimethacrylat, 2-Butyl-2-Ethyl-1,3-Propandioldiacrylate, 2-Butyl-2-Ethyl-1,3-Propandioldimethacrylat, Trimethylolpropandiacrylat oder Trimethylolpropandimethacrylat. Beispiele für alkoxylierte Triacrylate oder -methacrylate sind alkoxyliertes, bevorzugt ethoxyliertes Pentaerythrittriacrylat, Pentaerythrittrimethacrylat, Glycerintriacrylat, Glycerintrimethacrylat, 1,2,4-Butantrioltriacrylat, 1,2,4-Butantrioltrimethacrylat, Trimethylolpropantriacrylat, Trimethylolpropantrimethacrylat, Tricyclodecandimethanoldiacrylat, Tricyclodecandimethanoldimethacrylat, Ditrimethylolpropantetraacrylat oder Ditrimethylolpropantetramethacrylat.

Beispiele für alkoxylierte Tetra-, Penta- oder Hexaacrylate sind alkoxyliertes, bevorzugt ethoxyliertes Pentaerythrittetraacrylat, Dipentaerythrittetraacrylat, Dipentaerythritpentaacrylat Dipentaerythrithexaacrylat, Pentaerythrittetramethacrylat, Dipentaerythrittetramethacrylat, Dipentaerythritpentamethacrylat oder Dipentaerythrithexamethacrylat.

In den alkoxylierten Diacrylaten oder -methacrylaten, Triacrylaten oder -methacrylaten, Tetraacrylaten oder -methacrylaten, Pentaacrylaten oder -methacrylaten und/oder alkoxylierten Hexaacrylaten oder -methacrylaten der Komponente b) können alle Acrylatgruppen oder Methacrylatgruppen oder nur ein Teil der Acrylatgruppen oder Methacrylatgruppen im jeweiligen Monomer über Alkylenoxidgruppen an den entsprechenden Rest gebunden sein. Es können auch beliebige Mischungen solcher ganz oder teilweise alkoxylierten Di-, Tri-, Tetra-, Penta- oder Hexaacrylate bzw. -methacrylate eingesetzt werden. Dabei ist es auch möglich, das die Acrylat- oder Methacrylatgruppe(n) über mehrere aufeinanderfolgende Alkylenoxidgruppen, vorzugsweise Ethylenoxidgruppen an den aliphatischen, cycloaliphatischen oder aromatischen Rest des Monomeren gebunden sind. Die mittlere Anzahl der Alkylenoxid- bzw Ethylenoxidgruppen im Monomer wird durch den Alkoxylierungsgrad bzw. Ethoxylierungsgrad angegeben. Der Alkoxylierungsgrad bzw. Ethoxylierungsgrad kann bevorzugt von 2 bis 25 betragen, besonders bevorzugt sind Alkoxylierungsgrade bzw. Ethoxylierungsgrade von 2 bis 15, ganz besonders bevorzugt von 3 bis 9.

Ebenso erfindungsgemäß als Reaktivverdünner bzw. als Komponente b) des erfindungsgemäßen Beschichtungsmittels können Oligomere dienen, die zur Klasse der aliphatischen Urethanacrylate beziehungsweise der Polyesteracrylate oder Polyacrylacrylate gehören. Deren Verwendung als Lackbindemittel ist bekannt und ist in Chemistry & Technology of UV & EB Formulation for Coatings, Inks & Paints, Vol. 2, 1991, SITA Technology, London (P.K.T: Oldring (Ed.) auf S.73-123 (Urethane Acrylates) bzw. S.123-135 (Polyester Acrylates) beschrieben. Kommerziell erhältlich und geeignet im erfindungsgemäßen Sinne sind hier beispielsweise aliphatische Urethanacrylate wie Ebecryl® 4858, Ebecryl® 284, Ebecryl® 265, Ebecryl® 264, Ebecryl® 8465, Ebecryl® 8402 (Hersteller jeweils Cytec Surface Specialities), Craynor® 925 von Cray Valley, Viaktin® 6160 von Vianova Resin, Desmolux VP LS 2265 von Bayer MaterialScience AG, Photomer 6891 von Cognis oder auch in Reaktivverdünnern gelöste aliphatische Urethanacrylate wie Laromer® 8987 (70%ig in Hexandioldiacrylat) von BASF AG, Desmolux U 680 H (80%ig in Hexandioldiacrylat) von Bayer MaterialScience AG, Craynor® 945B85 (85% in Hexandioldiacrylat), Ebecryl® 294/25HD (75% in Hexandioldiacrylat), Ebecryl® 8405 (80% in Hexandioldiacrylat), Ebecryl® 4820 (65% in Hexandioldiacrylat) (Hersteller jeweils Cytec Surface Specialities) und Craynor® 963B80 (80% in Hexandioldiacrylat) jeweils von Cray Valley oder auch Polyesteracrylate wie Ebecryl® 810, 830 oder Polyacrylacrylate wie Ebecryl®, 740, 745, 767 oder 1200 von Cytec Surface Specialities.

In einer weiteren bevorzugten Ausführungsform umfasst der Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaacrylate und/oder Pentamethacrylate, alkoxylierte Hexaacrylate und/oder Hexamethacrylate, aliphatische Urethanacrylate, Polyesteracrylate, Polyacrylacrylate und Gemische davon.

In einer weiteren bevorzugten Ausführungsform umfasst der Reaktivverdünner (b) des erfindungsgemäßen Beschichtungsmittels Dipentaerythritol penta/hexaacrylat.

Für die Einstellung des Brechungsindex der Beschichtung sind aromatische multifunktionelle Monomere als Reaktivverdünner (b) in dem erfindungsgemäßen Beschichtungsmittel vorteilhaft geeignet. In einer weiteren Ausführungsform der vorliegenden Erfindung kann der mindestens eine Reaktivverdünner (b) aromatische multifunktionelle Monomere, bevorzugt ungesättigte aromatische Urethanacrylate, acrylierte Derivate von Bisphenol A und/oder acrylierte Derivate von Divinylbenzol umfassen. Acrylierte Derivate von Bisphenol A sind beispielsweise unter den Handelsnamen Ebecryl 150 und Ebecryl 600 über den Hersteller Cytec und unter dem Handelsnamen Desmolux U500 vom Hersteller Bayer MaterialScience zu beziehen. Im Rahmen der vorliegenden Erfindung können auch Gemische von aliphatischen und aromatischen Reaktivverdünnern eingesetzt werden.

Auch erfindungsgemäß sind Gemische der oben genannten vernetzenden multifunktionellen Monomere mit monofunktionellen Monomeren wie insbesondere Methylmethacrylat oder Styrol. Der Anteil der multifunktionellen Monomere in einem solchen Gemisch beträgt bevorzugt mindestens 20 Gew. %.

Der Reaktivverdünner ist ein wesentlicher Teil des erfindungsgemäßen Beschichtungsmittels und der erfindungsgemäßen Beschichtung. Der Anteil des mindestens einen Reaktivverdünners insgesamt beträgt im Festanteil des Beschichtungsmittels mindestens 30 Gew.-%, bevorzugt mindestens 40 Gew.-%, besonders bevorzugt mindestens 45 Gew.-%.

Der Gehalt an ethylenisch ungesättigten Gruppen hat wesentlichen Einfluss auf die erreichbaren Beständigkeitseigenschaften der mit Strahlung gehärteten Beschichtung. Daher enthält das erfindungsgemäße Beschichtungsmittel einen Gehalt an ethylenisch ungesättigten Gruppen von mindestens 3,0 mol pro kg Festgehalt des Beschichtungsmittels, bevorzugt mindestens 3,5 mol pro kg, besonders bevorzugt mindestens 4,0 mol pro kg Festgehalt des Beschichtungsmittels. Dieser Gehalt an ethylenisch ungesättigten Gruppen ist dem Fachmann auch unter dem Begriff der Doppelbindungsdichte wohlbekannt.

Der Begriff des mindestens einen Fotoinitiators des erfindungsgemäßen Beschichtungsmittel umfasst die gängigen dem Fachmann bekannten, kommerziell erhältlichen Verbindungen wie z. B. $\alpha$-Hydroxyketone, Benzophenon, $\alpha,\alpha$-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere, wobei die genannten Photoinitiatoren allein oder in Kombination von zwei oder mehreren oder in Kombination mit einem der obigen Polymerisationsinitiatoren benutzt werden können.

Als UV-Fotoinitiatoren können beispielsweise die IRGACURE®-Typen von BASF eingesetzt werden, so beispielsweise die Typen IRGACURE® 184, IRGACURE® 500, IRGACURE® 1173, IRGACURE®2959, IRGACURE® 745, IRGACURE® 651, IRGACURE® 369, IRGACURE® 907, IRGACURE® 1000, IRGACURE® 1300, IRGACURE® 819, IRGACURE® 819DW, IRGACURE® 2022, IRGACURE® 2100, IRGACURE® 784, IRGACURE® 250, ferner können die DAROCUR®-Typen von BASF eingesetzt werden, so beispielsweise die Typen DAROCUR® MBF, DAROCUR® 1173, DAROCUR® TPO, DAROCUR® 4265. Ein anderes Beispiel eines für den Einsatz im erfindungsgemäßen Beschichtungsmittel einsetzbaren UV-Photoinitiators ist unter dem Handelsnamen Esacure One von dem Hersteller Lamberti zu beziehen.

Fotoinitiatoren sind mit im Bereich von $\geq$ 0,1 bis $\leq$ 10 Gewichtsteilen des Feststoffgehaltes des Beschichtungsmittels im Beschichtungsmittel enthalten.

Das Beschichtungsmittel soll zudem über die 100 Gew.-Teile der Komponente a) bis c) hinaus ein oder mehrere organische Lösungsmittel enthalten.

Als Lösungsmittel werden hinsichtlich des bevorzugten Verwendungszweckes des erfindungsgemäßen Beschichtungsmittel solche verwendet, die Polycarbonat nicht angreifen. Solche Lösungsmittel sind bevorzugt Alkohole. Besonders bevorzugt sind dabei 1-Methoxy-2-propanol, Diacetonalkohol, 2,2,3,3-Tetrafluoropropanol und Gemische davon. Ganz besonders bevorzugt sind Diacetonalkohol und dessen Mischungen mit 1-Methoxy-2-propanol, bevorzugt davon solche, die mindestens 50 Gew.-% von Diacetonalkohol beinhalten.

Die Lackzusammensetzung enthält bevorzugt zusätzlich zu den 100 Gew.-Teilen der Komponente a) bis c) 0 bis 900 Gew.-Teile, besonders bevorzugt 100 bis 850 Gew.-Teile, ganz besonders bevorzugt 200 bis 800 Gew.-Teile des wenigstens einen organischen Lösungsmittels.

Das Beschichtungsmittel kann zudem über die 100 Gew.-Teile der Komponente a) bis c) hinaus optional ein oder mehrere weitere Lackadditive enthalten. Solche Lackadditive können beispielsweise ausgewählt sein aus der Gruppe enthaltend Stabilisatoren, Verlaufsmittel, Oberflächenadditive, Pigmente, Farbstoffe, anorganische Nanopartikel, Haftvermittler, UV-Absorber, IR-Absorber, bevorzugt aus der Gruppe enthaltend Stabilisatoren, Verlaufsmittel, Oberflächenadditive und anorganische Nanopartikel. Die Lackzusammensetzung enthält bevorzugt zusätzlich zu den 100 Gew.-Teilen der Komponente a) bis c) 0 bis 35 Gew.-Teile, besonders bevorzugt 0 bis 30 Gew.-Teile, ganz besonders bevorzugt 0,1 bis 20 Gew.-Teile wenigstens eines weiteren Lackadditivs. Bevorzugt beträgt der Gesamtanteil aller in der Lackzusammensetzung enthaltenen Lackadditive 0 bis 35 Gew.-Teile, besonders bevorzugt 0 bis 30 Gew.-Teile, ganz besonders bevorzugt 0,1 bis 20 Gew.-Teile.

Die Lackzusammensetzung kann anorganische Nanopartikel zur Erhöhung der mechanischen Beständigkeit, wie beispielsweise der Kratzfestigkeit und/oder Bleistifthärte enthalten.

Als Nanopartikel kommen anorganische Oxide, Mischoxide, Hydroxide, Sulfate, Carbonate, Carbide, Boride und Nitride von Elementen der II bis IV Hauptgruppe und/oder Elementen der I bis VIII Nebengruppe des Periodensystems einschließlich der Lanthanide in Frage. Bevorzugte Nanopartikel sind Siliziumoxid-, Aluminiumoxid-, Ceroxid-, Zirkonoxid-, Nioboxid-, Zinkoxid- oder Titanoxid-Nanopartikel, besonders bevorzugt sind Siliziumoxid-Nanopartikel.

Die eingesetzten Partikel weisen vorzugsweise mittlere Partikelgrößen (gemessen mittels dynamischer Lichtstreuung in Dispersion bestimmt als Z-Mittelwert) kleiner 200 nm, bevorzugt von 5 bis 100 nm, besonders bevorzugt 5 bis 50 nm auf. Bevorzugt weisen wenigstens 75%, besonders bevorzugt wenigstens 90 %, ganz besonders bevorzugt wenigstens 95% aller eingesetzten Nanopartikel die vorstehend definierten Größen auf.

Das Beschichtungsmittel kann auf einfache Weise hergestellt werden, indem das Polymer in dem Lösemittel bei Raumtemperatur oder bei erhöhten Temperaturen vorerst komplett gelöst wird und dann der bis Raumtemperatur abgekühlten Lösung die anderen obligatorischen und gegebenenfalls die optionalen Komponenten entweder in Abwesenheit von Lösungsmittel(n) zusammen gegeben und durch Rühren miteinander vermischt werden oder in Anwesenheit von Lösungsmittel(n) beispielsweise in das oder die Lösungsmittel gegeben und durch Rühren miteinander vermischt werden. Bevorzugt wird zuerst der Fotoinitiator in dem oder den Lösungsmitteln gelöst und anschließend die weiteren Komponenten hinzugegeben. Gegebenenfalls erfolgt anschließend noch eine Reinigung mittels Filtration, vorzugsweise mittels Feinfiltration.

Ein weiterer Gegenstand der vorliegenden Erfindung betrifft einen Schichtkörper, gemäß Ansprüche 9 bis 11 umfassend ein Substrat und eine Oberflächenbeschichtung, die erhältlich ist durch Beschichten des Substrates mit dem Beschichtungsmittel gemäß der vorliegenden Erfindung. Dabei wird erfindungsgemäß ein beschichtetes Substrat mit vorteilhaften Eigenschaften der Oberfläche hinsichtlich Kratzfestigkeit, Lösemittelbeständigkeit und anti-oiling-Effekt bereitgestellt.

Da das Vermeiden eines oiling-Effektes auf dem Gebiet der Herstellung von Kunststoffteilen mittels des film insert molding-Verfahrens von besonderer Bedeutung ist und durch die vorliegende Erfindung vorteilhafterweise eine Verbesserung erreicht wird, umfasst das zu beschichtende Substrat gemäß der vorliegenden Erfindung bevorzugt eine Folie.

Als zu beschichtende Folien werden bevorzugt Thermoplasten wie Polycarbonat, Polyacrylat oder Poly(meth)acrylat, Polysulfone, Polyester, thermoplastisches Polyurethan und Polystyrol sowie deren Copolymere und Mischungen (Blends) eingesetzt. Geeignete Thermoplasten sind beispielsweise Polyacrylate, Poly(meth)acrylate (z.B. PMMA; z.B. Plexiglas® des Herstellers Röhm), Cycloolefin-Copolymere (COC; z.B. Topas® des Herstellers Ticona; Zenoex® des Herstellers Nippon Zeon oder Apel® des Herstellers Japan Synthetic Rubber), Polysulfone (Ultrason@ des Herstellers BASF oder Udel® des Herstellers Solvay), Polyester, wie z.B. PET oder PEN, Polycarbonat (PC), Polycarbonat/Polyester-Blends, z.B. PC/PET, Polycarbonat/Polycyclohexylmethanolcyclohexandicarboxylat (PCCD; Xylecs® von der Fa GE), Polycarbonat/PBT und Mischungen daraus.

In einer besonders vorteilhaften und bevorzugten Ausführungsform der vorliegenden Erfindung umfasst die Folie des erfindungsgemäßen Schichtkörpers Polycarbonat oder Copolycarbonat.

Aufgrund der hervorragenden Schlagzähigkeit bei gleichzeitiger Transparenz kann Polycarbonat im Rahmen der vorliegenden Erfindung auch als thermoplastisches Polymer zum Hinterspritzen bzw. Füllen der 3D-geformten und mit der Schutzschicht beschichteten Folie verwendet in einem film insert molding-Verfahren zur Herstellung eines 3D-Formkörpers bzw. Kunststoffteils eingesetzt werden. In einer ebenfalls besonders bevorzugten Ausführungsform der vorliegenden Erfindung umfasst das thermoplastische Polymer damit Polycarbonat. Für die Erfindung geeignete Polycarbonate und Polycarbonat-Zubereitungen sowie Polycarbonat-Folien sind beispielsweise unter den Handelsnamen Makroion®, Bayblend® und Makroblend® (Bayer MaterialScience) erhältlich.

Geeignete Polycarbonate für die Herstellung der erfindungsgemäßen Polycarbonatzusammensetzungen sind alle bekannten Polycarbonate. Dies sind Homopolycarbonate, Copolycarbonate und thermoplastische Polyestercarbonate. Die geeigneten Polycarbonate haben bevorzugt mittlere Molekulargewichte $\overline{M}_w$ von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden. Zum Phasengrenzflächenverfahren sei beispielhaft auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen. Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate können aus Reaktionen von Bisphenolverbindungen mit Kohlensäureverbindungen, insbesondere Phosgen oder beim Schmelzeumesterungsprozess Diphenylcarbonat bzw. Dimethylcarbonat, erhalten werden. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt. Weitere Bisphenolverbindungen, die sich für die Polycarbonatsynthese einsetzen lassen, sind unter anderem offenbart in WO-A 2008037364, EP-A 1 582 549, WO-A 2002026862, WO-A 2005113639

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009, DE-A 25 00 092, DE-A 42 40 313, DE-A 19 943 642, US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A 1 506 249 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Kunststoffzusammensetzung(en) der Folie bzw. des thermoplastischen Polymers des 3D-Formkörpers können zusätzlich Additive, wie beispielsweise UV-Absorber, IR-Absorber sowie andere übliche Verarbeitungshilfsmittel, insbesondere Entformungsmittel und Fließmittel, sowie die üblichen Stabilisatoren, insbesondere Thermostabilisatoren sowie Antistatika, Pigmente, Farbmittel und optische Aufheller enthalten. In jeder Schicht können dabei unterschiedliche Additive bzw. Konzentrationen von Additiven vorhanden sein.

Ein weiterer Gegenstand der vorliegenden Erfindung ist ein Verfahren gemäß Ansprüche 12 bis 13 zur Herstellung einer beschichteten Folie, umfassend die Schritte

(i) Beschichten einer Folie mit einem Beschichtungsmittel, umfassend

(a) mindestens ein Styrol-Acrylonitril-Copolymer in einem Gehalt von mindestens 30 Gew.-% des Festanteils des Beschichtungsmittels;
(b) mindestens 30 Gew.-% eines UV-härtbaren Reaktivverdünners;
(c) 0,1 bis 10 Gewichtsteile mindestens eines Fotoinitiators; und
(d) mindestens ein organisches Lösungsmittel,

wobei der Anteil an ethylenisch ungesättigten Gruppen mindestens 3 mol pro kg des Festanteils des Beschichtungsmittels beträgt;
(ii) Trocknen der Beschichtung;
(iii) gegebenenfalls zurechtschneiden, dekaschieren, bedrucken und/oder thermisches oder mechanisches Verformen der Folie;
(iv) Bestrahlen der Beschichtung mit UV-Strahlung, dabei Härten der Beschichtung.

Dabei sind das Beschichtungsmittel mit seinen Bestandteilen und die Begriffe der Folien dieselben, die schon im Rahmen der vorliegenden Erfindung erläutert worden sind, auch in Kombination miteinander. In einer besonders bevorzugten Ausführungsform umfasst die Folie Polycarbonat oder Copolycarbonat.

Das Beschichten der Folie mit dem Beschichtungsmittel kann dabei nach den gängigen Verfahren der Beschichtung von Folien mit flüssigen Beschichtungsmitteln erfolgen, wie beispielsweise durch Rakeln, Spritzen, Gießen, Fluten, Tauchen, Sprühen, Aufwalzen oder Aufschleudern. Das Flutverfahren kann manuell mit Schlauch oder geeignetem Beschichtungskopf oder automatisch im Durchlauf über Flutlackierroboter- und gegebenenfalls Schlitzdüsen erfolgen. Bevorzugt wird eine Auftragung des Beschichtungsmittels über eine Übertragung Rolle auf Rolle. Die Oberfläche der zu beschichtenden Folie kann dabei durch Reinigung oder Aktivierung vorbehandelt sein.

Das Trocknen schließt sich an die Applikation des Beschichtungsmittels auf die Folie an. Hierzu wird insbesondere mit erhöhten Temperaturen in Öfen und mit bewegter und gegebenenfalls auch entfeuchteter Luft wie beispielsweise in Konvektionsöfen oder mittels Düsentrocknern sowie Wärmestrahlung wie IR und/oder NIR gearbeitet. Weiterhin können Mikrowellen zum Einsatz kommen. Es ist möglich und vorteilhaft, mehrere dieser Trocknungsverfahren zu kombinieren. Das Trocknen der Beschichtung im Schritt (II) umfasst bevorzugt das Ablüften bei Raumtemperatur und/oder erhöhter Temperatur, wie vorzugsweise bei 20 - 200 °C, besonders bevorzugt bei 40 - 120 °C. Nach dem Trocknen der Beschichtung ist diese blockfest, so dass das beschichtete Substrat, insbesondere die beschichtete Folie kaschiert, bedruckt, und/oder thermisch verformt werden kann. Insbesondere das Verformen ist dabei bevorzugt, da hier schon durch das Verformen einer beschichteten Folie die Form für ein film insert molding-Verfahren zur Herstellung eines dreidimensionalen Kunststoffteils vorgegeben werden kann.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen. Besonders bevorzugt ist dabei das thermische Verformen der beschichteten Folie zu einer dreidimensionalen Form, wie sie vorbereitend auf ein Hinterspritzen der Folie mit einem thermoplastischen Polymer wie Polycarbonat in einem film insert molding-Verfahren vorgenommen wird. In einer bevorzugten Ausführungsform umfasst der Schritt (iii) das Zuschneiden und thermische Verformen der beschichteten Folie.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von $\geq$ 200 nm bis $\leq$ 750 nm, oder durch Bestrahlen mit energiereichen Elektronen (Elektronenstrahlung, zum Beispiel von $\geq$ 90 keV bis $\leq$ 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Excimerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von $\geq$ 80 mJ/cm$^2$ bis $\leq$ 5000 mJ/cm$^2$.

In einer bevorzugten Ausführungsform ist die aktinische Strahlung daher Licht im Bereich des UV-Lichtes.

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglichst wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von $\geq$ 0,1 Gewichts-% bis $\leq$ 10 Gewichts-%, besonders bevorzugt von $\geq$ 0,2 Gewichts-% bis $\leq$ 3,0 Gewichts-% bezogen auf den Festkörper der Beschichtung eingesetzt. Zur Härtung dieser Beschichtungen wird bevorzugt eine Dosis von $\geq$ 80 mJ/cm$^2$ bis $\leq$ 5000 mJ/cm$^2$ eingesetzt.

Ein Hinterspritzen der beschichteten Folie mit einem thermoplastischem Polymer wie Polycarbonat nach erfolgter Härtung der Folienbeschichtung und der optionalen, meist gewünschten Umformung der beschichteten Folie ist dem Fachmann durch das film insert molding-Verfahren, wie es beispielsweise in WO 2004/082926 A1 und WO 02/07947 A1 beschrieben ist, wohlbekannt. In einer bevorzugten Ausführungsform des erfindungsgemäßen Verfahrens erfolgt das Hinterschichten der Folie in Schritt (V) mittels Extrusion oder Spritzguss, vorzugsweise mit Polycarbonatschmelze. Die Verfahren der Extrusion und des Spritzgusses hierzu sind dem Fachmann wohlbekannt und beispielsweise im "Handbuch Spritzgießen", Friedrich Johannnaber/Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

Aufgrund der hervorragenden Eigenschaften hinsichtlich Kratzfestigkeit, Lösemittelbeständigkeit und des verringerten oiling-Effektes der Oberflächen ist ein weiterer Gegenstand der vorliegenden Erfindung die Verwendung des Beschichtungsmittels gemäß mindestens einem der Ansprüche 1 bis 10 oder des Schichtkörpers gemäß mindestens einem der Ansprüche 11 bis 13 zur Herstellung von Kunststoffteilen in film insert molding-Verfahren. In einer bevorzugten Ausführungsform umfasst die erfindungsgemäße Verwendung die Herstellung von Kunststoffteilen für die Auto-, Transport-, Elektro-, Elektronik- und Bauindustrie.

Ein weiterer Gegenstand der vorliegenden Erfindung ist ein durch film insert molding erhältlicher 3D-Formkörper oder Kunststoffteil, umfassend eine Folie, vorzugsweise eine Polycarbonatfolie, und eine die Oberfläche des Formkörpers bildende Beschichtung, die erhältlich ist durch Beschichten mit dem erfindungsgemäßen Beschichtungsmittel, sowie ein thermoplastisches Polymer, vorzugsweise Polycarbonat.

**Beispiele:**

Bewertungsmethoden

Die Schichtdicke der Beschichtungen wurde durch Beobachtung der Schnittkante in einem optischem Mikroskop des Typs Axioplan des Herstellers Zeiss gemessen. Methode - Auflicht, Hellfeld, Vergrößerung 500x.

Bewertung der Blockfestigkeit

Zur Simulation der Blockfestigkeit von aufgerollten vorgetrockneten beschichteten Folien reichen klassische Prüfmethoden wie etwa in DIN 53150 beschrieben nicht aus, weshalb auf nachfolgende Prüfung zurückgegriffen wurde: Die Beschichtungsmaterialien wurden mit einer handelsüblichen Rakel (Sollnassschichtdicke 100 $\mu$m) auf Makrofol DE 1-1 (375 $\mu$m) aufgetragen. Nach einer Ablüftphase von 10 min bei 20 °C bis 25 °C wurde die beschichteten Folien für 10 min bei 110 °C in einem Umluftofen getrocknet. Nach einer Abkühlphase von 1 min wurde eine handelsübliche Haftkaschierfolie GH-X173 natur (Firma Bischof u. Klein, Lengerich, Deutschland) mit einer Kunststoffwalze auf eine Fläche von 100 mm x 100 mm faltenfrei auf der getrockneten beschichteten Folie aufgebracht. Anschließend wurde das kaschierte Folienstück flächig mit einem Gewicht von 10 kg für 1 Stunde belastet. Danach wurde die Kaschierfolie entfernt und die beschichtete Oberfläche visuell beurteilt.

Bewertung der Bleistifthärte

Die Bleistifthärte wurde analog ASTM D 3363 unter Verwendung eines Elcometer 3086 Scratch boy (Elcometer Instruments GmbH, Aalen, Deutschland) bei einer Belastung von 500 g, wenn nicht anders angegeben, gemessen.

Bewertung der Stahlwolle-Verkratzung

Die Stahlwolle-Verkratzung wird bestimmt, indem eine Stahlwolle No. 00 (Oskar Weil GmbH Rakso, Lahr, Deutschland) auf das flächige Ende eines 500 g Schlosser-Hammers geklebt wird, wobei die Fläche des Hammers 2,5 cm x 2,5 cm, d.h. ca. 6,25 cm$^2$ beträgt. Der Hammer wird ohne zusätzlichen Druck auf die zu prüfende Fläche aufgesetzt, so dass eine definierte Belastung von ca. 560 g erreicht wird. Der Hammer wird dann 10mal in Doppelhüben vor und zurück bewegt. Nachfolgend wird die belastete Oberfläche mit einem weichen Tuch von Geweberückständen und Lackpartikeln gereinigt. Die Verkratzung wird durch Haze- und Glanzwerte charakterisiert, gemessen quer zur Verkratzungsrichtung mit einem Micro HAZE plus (20°-Glanz und Haze; Byk-Gardner GmbH, Geretsried, Deutschland). Die Messung erfolgt vor und nach Verkratzung. Angegeben werden die Differenzwerte bei Glanz und Haze vor und nach Belastung als $\Delta$Glanz und $\Delta$Haze.

Bewertung der Lösemittelbeständigkeit

Die Lösemittelbeständigkeit der Beschichtungen wurde üblicherweise mit Isopropanol, Xylol, 1-Methoxy-2-propylacetat, Ethylacetat, Methylethylketon in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch sauber gewischt. Die Abmusterung erfolgt sofort visuell und nach leichten Kratzen mit dem Fingernagel.

Folgende Stufen werden unterschieden:

- 0 = unverändert; keine Veränderung sichtbar; durch Kratzen nicht verletzbar.

- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennwerten 0 und 1 üblicherweise bestanden. Kennwerte > 1 stehen für ein "nicht bestanden".

Bewertung des Oiling-Effekts

Der "Oiling-Effekt" wird auch als "Newton Ring-Effekt" bezeichnet. Newton-Ringe treten als irreguläres Interferenzmuster an der Oberfläche beschichteter Teile auf, wenn diese in Reflexion unter weißem Licht betrachtet werden. Auf einer reflektierenden, glänzenden Oberfläche wird ein Lichtstrahl sowohl an der äußeren Oberfläche eines beschichteten Bauteils, wie auch an der darunter liegenden Oberfläche des beschichteten Substrats reflektiert. Tritt zwischen den beiden reflektierten Strahlen einer Wellenlänge ein Gangunterschied im Bereich $\lambda/2$ auf, so wird diese Wellenlänge durch Interferenz abgeschwächt oder sogar ausgelöscht und das ursprünglich eingestrahlte weiße Licht wird in Reflektion lokal farblich verändert. Diese Muster können auch als Oszillationen im Reflektionsspektrum beschichteter Oberflächen (hier beschichteter Folien) nachgewiesen werden. Die Intensität und die Frequenz dieser Oszillationen ist ein Maß für das Auftreten des Newton Ring-Effekts.

Die zur Bestimmung des Oiling-Effektes verwendeten Messwerte sind aus Transmissions- und Reflektionsspektren entnommen, die mit einem Spektrometer der Firma STEAG ETA-Optik, CD-Measurement System ETA-RT, aufgenommen wurden. Es wurde die direkte Reflektion unter einem Betrachtungswinkel von 0° gemessen.

Die Maßzahl für die Newton Ringe wurde aus den Reflektionsspektren wie folgt ermittelt:

mPV:      maximales Peak-Valley-Verhältnis in % im Bereich 400 - 650 nm.

mPV/2:    Amplitude der Oszillation in %

R:       Reflektion bei der zugehörigen Wellenlänge in %

$$\text{Newton Ringe} = \text{mPV/2/R} \cdot 1000$$

Die Wellenlängenbereiche unterhalb 400 nm und oberhalb 650 nm werden nicht betrachtet, da Farbkontraste in diesen Bereichen so gering sind, dass keine für das bloße Auge störenden Effekte sichtbar werden.

**Beispiel 1:** Herstellung eines Beschichtungsmittels

50 g Luran® 368 R (Hersteller Styrolution) wurden in 142 g einer Mischung (1:1) aus 1-Methoxy-2-propanol und Diacetonalkohol bei 100 °C innerhalb von ungefähr 3 h gelöst. Die Lösung wurde bis auf ca. 30 °C abgekühlt. Separat wurden in 83 g der Mischung (1:1) ausl-Methoxy-2-propanol und Diacetonalkohol bei Raumtemperatur folgende Komponenten gelöst: 50 g von Dipentaerythritpenta/hexaacrylat (DPHA, Hersteller Cytec), 2 g von Esacure One (Hersteller Lamberti), 1 g von Darocur 4265 (Hersteller BASF), 0,125 g von BYK 333 (Hersteller BYK). Die zweite Lösung wurde der Polymerlösung unter Rühren zugegeben. Das Gemisch wurde noch 3 h bei Raumtemperatur und unter Abschirmung des direkten Lichteinflusses gerührt, abgefüllt und 1 Tag ruhen gelassen. Die Ausbeute betrug 320 g, die Viskosität (23°C; DIN EN ISO 3219)) 2500 mPas bei einer Scherrate von 27,3 1/s. Der Feststoffgehalt betrug 31,4 Gew.-% und die berechnete Doppelbindungsdichte im Feststoffanteil des Beschichtungsmittels ca. 5,1 mol/kg.

**Beispiel 2:** Herstellung eines Beschichtungsmittels

117 g Luran® 368 R (Hersteller Styrolution) wurden in 284 g einer Mischung (2:3) aus 1-Methoxy-2-propanol und Diacetonalkohol bei 100°C innerhalb von ungefähr 3 h gelöst. Die Lösung wurde bis auf ca. 30 °C abgekühlt. Separat wurden in 166 g einer Mischung (2:3) aus 1-Methoxy-2-propanol und Diacetonalkohol bei Raumtemperatur folgende Komponenten gelöst: 117 g Dipentaerythritpenta/hexaacrylat (DPHA, Hersteller Cytec), 4,7 g Esacure One (Hersteller Lamberti), 2,35 g Darocur 4265 (Hersteller BASF) und 0,25 g BYK 333 (Hersteller BYK). Die zweite Lösung wurde der Polymerlösung unter Rühren zugegeben. Der Lack wurde noch 3 h bei Raumtemperatur und unter Abschirmung des direkten Lichteinflusses gerührt, abgefüllt und 1 Tag ruhen gelassen. Die Ausbeute betrug 650 g, die Viskosität (23°C, DIN EN ISO 3219) 4990 mPas, der Feststoffgehalt 35 Gew.-% und die berechnete Doppelbindungsdichte in Feststoffanteil des Beschichtungsmittels ca. 5,1 mol/kg.

**Beispiel 3:** Herstellung eines Beschichtungsmittels

95 g Poly-(styrol-co-acrylonitril) (Hersteller Aldrich, Katalog-Nr.182850, $M_w$ 165000 (GPS, Angabe von Aldrich) Acrylnitril 25 % (Angabe von Aldrich)) wurden in 270 g einer Mischung (2:3) aus1-Methoxy-2-propanol und Diacetonalkohol bei 100°C in ca. 3h gelöst. Die Lösung wurde bis auf ca. 30°C abgekühlt. Separat wurden in 158 g einer Mischung (2:3) aus 1-Methoxy-2-propanol und Diacetonalkohol bei Raumtemperatur folgende Komponenten gelöst: 95 g Dipentaerythritpenta/hexaacrylat (DPHA, Hersteller Cytec), 3,8 g Esacure One (Hersteller Lamberti), 1,9 g Darocur 4265 (Hersteller BASF) und 0,24 g BYK 333 (Hersteller BYK). Die zweite Lösung wurde der Polymerlösung unter Rühren zugegeben. Das Gemisch wurde noch 3 h bei Raumtemperatur und unter Abschirmung des direkten Lichteinflusses gerührt, abgefüllt und 1 Tag ruhen gelassen. Die Ausbeute betrug 623 g, die Viskosität (23°C, DIN EN ISO 3219) 1470 mPas, der Feststoffgehalt 31,4 Gew.-% und die berechnete Doppelbindungsdichte im Feststoffanteil des ca. 5,1 mol/kg.

**Vergleichsbeispiel 1:** Herstellung eines nicht erfindungsgemäßen Beschichtungsmittels

25 g Poly-(methacrylsäure-methylester) (Hersteller Aldrich, Katalog-Nr. 182265, $M_w$ 996000 (GPS, Angabe von Aldrich) wurden in 142 g 1-Methoxy-2-propanol bei 100°C innerhalb von ungefähr 5 h gelöst. Die Lösung wurde bis auf ca. 30°C abgekühlt. Separat wurden in 83 g 1-Methoxy-2-propanol bei Raumtemperatur folgende Komponenten gelöst: 25 g Dipentaerythritpenta/hexaacrylat (DPHA, Hersteller Cytec), 2,0 g Irgacure 1000 (Hersteller BASF), 1,0 g Darocur 4265 (Hersteller BASF) und 0,0625 g BYK 333 (Hersteller BYK). Die zweite Lösung wurde der Polymerlösung unter Rühren zugegeben. Der Lack wurde noch 3 h bei Raumtemperatur und unter Abschirmung des direkten Lichteinflusses gerührt, abgefüllt und 1 Tag ruhen gelassen. Die Ausbeute betrug 270 g, die Viskosität (23°C, DIN EN ISO 3219) 9060 mPas, der Feststoffgehalt 19 Gew.-% und die berechnete Doppelbindungsdichte im Feststoffanteil ca. 5,1 mol/kg.

**Beispiel 4:** Prüfung der Löslichkeit verschiedener SAN-Produkte

Die Löslichkeit von verschiedenen kommerziell erhältlichen SAN-Produkte wurde in drei für den Anwendungsbereich der vorliegenden Erfindung besonders bevorzugten Lösemitteln geprüft: in 1-Methoxy-2-propanol (MP-ol), in Diacetonalkohol (DAA) und in einer Mischung (1:1) von beiden. Für die Prüfung wurde eine anwendungsrelevante Konzentration von jeweils 25 Gew.-% des Polymers in Lösemittel angepeilt. Der Lösungsversuch wurde innerhalb 4 h bei 120°C unter Rühren durchgeführt. Dann wurde ein Zwischenergebnis registriert. Die Lösung wurde dann bis auf Raumtemperatur abgekühlt und ein endgültiges Ergebnis registriert." Nicht löslich" bedeutet ein Ausfallen des Polymers beim Abkühlen der Lösung.

| | Zusammensetzung,Gew.-% | | | MP-ol | | DAA | | MP-ol/DAA=1:1 | |
|---|---|---|---|---|---|---|---|---|---|
| | Acrylnitril | Styrol | α-Methylstyrol | 120°C | 20°C | 120°C | 20°C | 120°C | 20°C |
| Luran 368R | 23,1[#] | 76,9[#] | - | klare Lösung | nicht löslich | klare Lösung | klare Lösung | klare Lösung | klare Lösung |
| Luran 388S | 32,8[#] | 67,2[#] | - | nicht löslich | nicht löslich | klare Lösung | klare Lösung | klare Lösung | trübe Lösung |
| Luran HH120 | 30,7[#] | - | 69,3[#] | nicht löslich | nicht löslich | klare Lösung | nicht löslich | klare Lösung | nicht löslich |
| Tyril 790 | 28,9[#] | 71,1[#] | - | klare Lösung | nicht löslich | klare Lösung | klare Lösung | klare Lösung | trübe Lösung |
| Tvril 867E | 26,0[#] | 74,0[#] | - | klare Lösung | nicht löslich | klare Lösung | klare Lösung | klare Lösung | klare Lösung |
| Tvril 875 | 26,0[#] | 74,0[#] | - | klare Lösung | nicht löslich | klare Lösung | klare Lösung | klare Lösung | klare Lösung |
| Tvril 905 | 21,5[#] | 78,5[#] | - | klare Lösung | nicht löslich | klare Lösung | klare Lösung | klare Lösung | trübe Lösung |

(fortgesetzt)

| | Zusammensetzung, Gew.-% | | | MP-ol | | DAA | | MP-ol/DAA=1:1 | |
|---|---|---|---|---|---|---|---|---|---|
| | Acrylnitril | Styrol | $\alpha$-Methylstyrol | 120°C | 20°C | 120°C | 20°C | 120°C | 20°C |
| Elix 280G | 23,7[#] | 76,3[#] | - | klare Lösung | nicht löslich | klare Lösung | klare Lösung | klare Lösung | klare Lösung |
| Aldrich, Katalog-Nr. 182850 | 25* | | - | nicht löslich | nicht löslich | klare Lösung | klare Lösung | klare Lösung | klare Lösung |
| Aldrich, Katalog-Nr. 182869 | 30* | | - | klare Lösung | nicht löslich | klare Lösung | nicht löslich | klare Lösung | nicht löslich |
| [#] NMR-Bestimmung, 1H, 400MHz, $C_2D_2Cl_4$/TMS; * Angaben von Aldrich; Luran® ist eine Handelsmarke des Herstellers Styrolution; Tytil® ist eine Handelsmarke des Herstellers Styron, Elix ist ein Handelsname des Herstellers Elix Polymers. | | | | | | | | | |

Dadurch konnte gezeigt werden, das SAN-Copolymere auf Styrol-Basis mit einem Anteil Acrylnitril von weniger als 30 Gew.-% sich besonders gut in gemäß der vorliegenden Erfindung bevorzugten Lösemittelmischungen (1:1) aus 1-Methoxy-2-propanol und Diacetonalkohol lösen. Dadurch werden SAN-Copolymere mit einem Acrylnitril-Anteil im Bereich von $\geq$ 20 Gew.-% bis $\leq$ 30 Gew.-% im Rahmen der vorliegenden Erfindung besonders bevorzugt, insbesondere in Kombination mit einem Lösungsmittelgemisch aus 1-Methoxy-2-propanol und Diacetonalkohol.

**Beispiel 5:** Herstellung beschichteter Folien

Die Beschichtungsmittel aus den Beispielen 1 bis 3 und des Vergleichsbeispiels 1 wurden mittels Schlitzgießer des Herstellers TSE Troller AG auf die Trägerfolie, z.B. Makrofol DE 1-1 (Bayer MaterialScience AG, Leverkusen, Deutschland), aufgetragen.

Typische Antragsbedingungen sind wie folgt:

- Bahngeschwindigkeit 1,3 bis 2,0 m/min
- Nasslackauftrag 20 - 150 $\mu$m
- Umlufttrockner 90 - 110 °C, bevorzugt im Bereich der TG des zu trocknenden Polymers.
- Verweilzeit im Trockner 3,5 - 5 min.

Die Beschichtung erfolgte Rolle auf Rolle, das heißt, dass die Polycarbonatfolie in der Beschichtungsanlage abgerollt wurde. Die Folie wurde durch eines der oben genannten Antragsaggregate geführt und mit der Beschichtungslösung beaufschlagt. Danach wurde die Folie mit der nassen Beschichtung durch den Trockner gefahren. Nach Ausgang aus dem Trockner wurde die jetzt trockene Beschichtung üblicherweise mit einer Kaschierfolie versehen, um diese vor Verschmutzung und Verkratzung zu schützen. Danach wurde die Folie wieder aufgerollt.

Für die Prüfung der Endeigenschaften des Produktes kann die beschichtete Folie nach Ausgang aus dem Trockner vorerst mit UV-Lampe ausgehärtet und dann mit einer Kaschierfolie versehen werden.

**Beispiel 6:** Überprüfung der Blockfestigkeiten

Die beschichteten Seiten der in Beispiel 5 erzeugten, nicht mit UV ausgehärteten Folien wurden mit einer Kaschierfolie vom Typ GH-X 173 A (Bischof + Klein, Lengerich, Deutschland) abgedeckt und 1h bei ca. 23 °C mit einer Aluminiumplatte in den Maßen 4,5 x 4,5 cm$^2$ und einem Gewicht von 2 kg beaufschlagt. Danach wurden das Gewicht und die Kaschierfolie entfernt und die Oberfläche der Beschichtung visuell auf Veränderungen geprüft. Die Ergebnisse sind in Tabelle 1 zusammengefasst.

**Tabelle 1:** Blockfestigkeit der Beschichtungen

| Beschichtungsmittel | Schichtdicke auf 250 μm PC-Folie | Blockfestigkeit |
|---|---|---|
| Beispiel 4 | 20 μm | i.O. |
| Beispiel 2 | 14 μm | i.O. |
| Beispiel 3 | 15 μm | i.O. |

Wie aus den Ergebnissen in der Tabelle 1 hervorgeht, sind die erfindungsgemäßen Folien mit den erfindungsgemäßen Beschichtungen nach dem Trocken auf den Folien schon für die weitere Verarbeitung hinreichend blockfest.

**Beispiel 7:** Formen der beschichteten Folien und Härten der Beschichtungen

Die HPF-Verformungsversuche wurden auf einer SAMK 360 - Anlage (Hersteller HDVF Kunststoffmaschinen GmbH) ausgeführt. Das Werkzeug wurde auf 100 °C elektrisch beheizt. Die Folienaufheizung wurde mittels IR Strahler bei 240-260-280°C vorgenommen. Die Heizzeit betrug 16 Sekunden. Es wurde eine Folientemperatur von ca. 170°C erreicht. Die Verformung erfolgte bei einem Verformungsdruck von 100 bar. Das Verformungswerkzeug war eine Heizungs-/Lüftungs-Blende (HL-Blende).

Der entsprechende Folienbogen wurde auf einer Palette positionsgenau fixiert. Die Palette fuhr durch die Verformungsstation in die Heizzone und verweilte dort die eingestellte Zeit (16 s). Dabei wurde die Folie so aufgeheizt, dass die Folie kurzzeitig eine Temperatur oberhalb des Erweichungspunktes erfuhr, der Kern der Folie war ca. 10-20 °C kälter. Dadurch war die Folie relativ stabil, wenn sie in die Verformungsstation eingefahren wird.

In der Verformungsstation wurde die Folie durch Zufahren des Werkzeuges über dem eigentlichen Werkzeug fixiert, gleichzeitig wurde mittels Gasdruck die Folie über das Werkzeug geformt. Die Druckhaltezeit von 7 s sorgte dafür, dass die Folie das Werkzeug passgenau abformte. Nach der Haltezeit wurde der Gasdruck wieder entlastet. Das Werkzeug öffnete sich und die umgeformte Folie wurde aus der Verformungsstation herausgefahren.

Die Folie wurde anschließend von der Palette entnommen und konnte nun mit UV-Licht ausgehärtet werden.

Mit dem verwendeten Werkzeug wurden Radien bis hinunter zu 1 mm abgebildet.

Die UV-Härtung der erfindungsgemäßen Beschichtung wurde mit einer Quecksilberdampf-Hochdrucklampe vom Type evo 7 dr (ssr engineering GmbH, Lippstadt, Deutschland) ausgeführt. Diese Anlage ist ausgestattet mit dichroitischem Reflektoren und Quarzscheiben und hat eine spezifische Leistung von 160 W/cm. Es wurde eine UV-Dosis von 2,0 J/cm$^2$ und eine Intensität von 1,4 W/cm$^2$ appliziert. Die Oberflächentemperatur sollte > 60 °C erreichen.

Die Angaben zur UV-Dosis wurden mit einem Lightbug ILT 490 (International Light Technologies Inc., Peabody MA, USA) ermittelt. Die Angaben zur Oberflächentemperatur wurden mit Temperatur-Teststreifen der Marke RS (Bestellnummer 285-936; RS Components GmbH, Bad Hersfeld, Deutschland) ermittelt.

Ergebnisse zur Beständigkeit der Beschichtungen, die unter Verwendung der genannten Bedingungen vernetzt wurden, sind Tabelle 2 zu entnehmen.

**Beispiel 8:** Testmethoden:

**Tabelle 2:** Chemikalien- und Kratzbeständigkeit der Beschichtungen

| Beschichtungsmittel/Schichtdicke auf 250 μm PC-Folie | Lösemittel | Bleistifthärte | Stahlwolle (Hersteller Rakso, No. 00) |
|---|---|---|---|
| | IP/MPA/X/EA/MEK 1h/RT | 500 g Mitsubishi | 560 g / 10 DH ΔG / ΔH |
| Beispiel 2 /5μm | 0/0/0/0/0 | B | 2/1 |
| Beispiel 3 /4μm | 0/0/0/0/0 | B | 3/2 |
| Beispiel 4 /5μm | 0/0/0/0/0 | H | 3/8 |
| Makrofol DE 1-1 250μm, unbeschichtet | 0/5/5/5/5 | 3B | 100 / 285 |
| IP/MPA/X/EA/MEK steht für Isopropanol, 1-Methoxy-2-propylacetat, Xylol, Ethylacetat, Methylethylketon | | | |

Wie die Tabelle 2 zeigt, verbessert die erfindungsgemäße Beschichtung sogar in einer dünnen Ausführung die Bleistifthärte und Kratzfestigkeit einer handelsüblichen Folie. Die erfindungsgemäße Beschichtung verleiht darüber hinaus eine Lösemittelbeständigkeit auch gegen sonst gegenüber PC sehr aggressiven Lösungsmitteln.

**Beispiel 9:** Bestimmung des Brechungsindexes der Beschichtungen

Der Brechungsindex n in Abhängigkeit von der Wellenlänge der Proben wurde aus den Transmissions- und Reflexionsspektren erhalten. Dazu wurden ca. 100 - 300 nm dicke Filme der Beschichtungen der Beispiele 2 bis 3 sowie des Vergleichsbeispiels 1 auf Quarzglasträger aufgeschleudert. Das Transmissions- und Reflexionsspektrum dieses Schichtpaketes wurde mit einem Spektrometer "CD-Measurement System ETA-RT" von der Hersteller AudioDev gemessen und danach die Schichtdicke und der spektrale Verlauf von n an die gemessenen Transmissions- und Reflexionsspektren im Bereich von 380 - 850 nm angepasst. Dieses geschah mit der internen Software des Spektrometers und erforderte zusätzlich die Brechungsindexdaten des Quarzglassubstrates, die in einer Blindmessung vorab bestimmt wurden. Die Brechungsindizes für die ausgehärteten Lacke beziehen sich auf die Wellenlänge von 589 nm und entsprechen damit $n_D^{20}$.

**Tabelle 3:** Brechungsindices der Beschichtungen

| Beschichtung mit dem Lack aus | $n_D^{20}$ |
|---|---|
| Beispiel 2 | 1,544 |
| Vergleichsbeispiel 1 | 1,511 |

Damit konnte gezeigt werden, dass der erfindungsgemäße Einsatz von SAN-Polymeren gegenüber dem Polymethylmethacrylat des Vergleichsbeispiels den Brechungsindex der Beschichtung an den Brechungsindex einer Polycarbonatfolie ($n_D^{20}$ von 1,585) näher anzupassen in der Lage war, was zu einer vorteilhaften Reduzierung des Regenbogenphänomens führt.

**Beispiel 10:** Bestimmung der Stärke des Regenbogeneffektes

**Tabelle 4:** Auswertung der Reflektionsspektren

| Beschichtungsmittel/ Schichtdicke auf 250 μm PC-Folie | Reflektion (R) | max. Peak-Valley-Wert (mPV) im Bereich > 400 nm bis < 650 nm | Newton Ringe mPV/ 2/R*1000 |
|---|---|---|---|
| | (%) | (%) | (#) |
| Beispiel 2 / 5μm | 9,2 | 0,5 | 27 |
| Vergleichsbeispiel 1 / 5μm | 8,7 | 1,3 | 74 |

Bei Werten für die Newton Ringe unter 30 ist das Oiling mit dem bloßen Auge unter Leuchtstoffröhren nicht mehr wahrnehmbar. Die SAN-basierte Beschichtung aus Beispiel 2 zeigt einen Wert von 27. Auch in schwarz hinterdruckter, hochglänzender Form gibt es keine störenden Regenbogeneffekte auf der Oberfläche.

Vergleichsbeispiel 1 zeigt dagegen unter denselben Bedingungen bei gleicher Schichtdicke der Beschichtung von 5 μm deutlich störende farbige Interferenzmuster. Mit einem Wert von 74 für die Newton Ringe wird diese Beobachtung auch durch das Reflektionsspektrum deutlich bestätigt.

Durch den Einsatz der erfindungsgemäßen Beschichtungsmittel ist der Regenbogeneffekt deutlich kleiner ausgeprägt, als bei Verwendung von Polymethylmethacrylat als thermoplastischem Polymer. Dieses geschieht bereits bei 5 μm Schichtstärke, also in einem Bereich, wo der Regenbogeneffekt am stärksten ausgeprägt ist.

Es konnte somit gezeigt werden, dass durch die Beschichtungsmittel und dadurch beschichtete Folien eine besonders vorteilhafte Kombination von Kratzfestigkeit, Lösemittelbeständigkeit und einer Reduzierung des unerwünschten Oiling-Effektes bei Folienoberflächen erreicht werden konnte.

Damit sind die Beschichtungsmittel und beschichtete Folien gemäß der vorliegenden Erfindung in besonderer Weise geeignet zur Verwendung zur Herstellung von Kunststoffteilen, insbesondere in film insert molding-Verfahren.

**Patentansprüche**

1.  Beschichtungsmittel, umfassend

    (a) mindestens ein Styrol-Acrylonitril-Copolymer in einem Gehalt von mindestens 30 Gew.-% des Festanteils des Beschichtungsmittels;
    (b) mindestens 30 Gew.-% eines UV-härtbaren Reaktivverdünners;
    (c) 0,1 bis 10 Gewichtsteile mindestens eines Fotoinitiators; und
    (d) mindestens ein organisches Lösungsmittel,

    wobei der Anteil an ethylenisch ungesättigten Gruppen mindestens 3 mol pro kg des Festanteils des Beschichtungsmittels beträgt.

2.  Beschichtungsmittel gemäß Anspruch 1, wobei das Styrol-Acrylonitril-Copolymer (a) einen Acrylnitril-Anteil im Bereich von $\geq$ 20 und $\leq$ 30 Gew.-% aufweist.

3.  Beschichtungsmittel gemäß Anspruch 1 oder Anspruch 2, wobei der mindestens eine UV-härtbare Reaktivverdünner (b) bifunktionelle, trifunktionelle, tetrafunktionelle, pentafunktionelle oder hexafunktionelle Acryl- und/oder Methacrylmonomere umfasst.

4.  Beschichtungsmittel gemäß Anspruch 1 oder Anspruch 2, wobei der mindestens eine UV-härtbare Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaacrylate und/oder Pentamethacrylate, alkoxylierte Hexaacrylate und/oder Hexamethacrylate, aliphatische Urethanacrylate, Polyesteracrylate, Polyacrylacrylate und Gemische davon umfasst.

5.  Beschichtungsmittel gemäß mindestens einem der vorstehenden Ansprüche, wobei der mindestens eine UV-härtbare Reaktivverdünner zusätzlich mindestens 20 Gew.-% des Gesamtanteils an Reaktivverdünner monofunktioneller Monomere, bevorzugt Methylmethacrylat oder Styrol, umfasst.

6.  Beschichtungsmittel gemäß mindestens einem der vorstehenden Ansprüche, wobei das Lösungsmittel ausgewählt ist aus 1-Methoxy-2-propanol, Diacetonalkohol, 2,2,3,3-Tetrafluoropropanol und Gemischen davon.

7.  Beschichtungsmittel gemäß mindestens einem der vorstehenden Ansprüche, wobei das Lösungsmittel Diacetonalkohol und/oder 1-Methoxy-2-propanol umfasst.

8.  Beschichtungsmittel gemäß mindestens einem der vorstehenden Ansprüche, wobei das Lösungsmittel ein Gemisch aus mindestens 50 Gew.-% Diacetonalkohol und 1-Methoxy-2-propanol umfasst.

9.  Schichtkörper, umfassend ein Substrat und eine Oberflächenbeschichtung, erhältlich durch Beschichten des Substrates mit einem Beschichtungsmittel gemäß mindestens einem der Ansprüche 1 bis 10.

10. Schichtkörper gemäß Anspruch 9, wobei das Substrat eine Folie ist.

11. Schichtkörper gemäß Anspruch 10, wobei die Folie Polycarbonat und/oder Copolycarbonat umfasst.

12. Verfahren zur Herstellung einer beschichteten Folie, umfassend die Schritte

    (i) Beschichten einer Folie mit einem Beschichtungsmittel, umfassend

    (a) mindestens ein Styrol-Acrylonitril-Copolymer in einem Gehalt von mindestens 30 Gew.-% des Festanteils des Beschichtungsmittels;
    (b) mindestens 30 Gew.-% eines UV-härtbaren Reaktivverdünners;
    (c) 0,1 bis 10 Gewichtsteile mindestens eines Fotoinitiators; und
    (d) mindestens ein organisches Lösungsmittel,

    wobei der Anteil an ethylenisch ungesättigten Gruppen mindestens 3 mol pro kg des Festanteils des Beschichtungsmittels beträgt;

(ii) Trocknen der Beschichtung;

(iii) gegebenenfalls Zurechtschneiden, Dekaschieren, Bedrucken und/oder thermisches oder mechanisches Verformen der Folie;

(iv) Bestrahlen der Beschichtung mit UV-Strahlung, dabei Härten der Beschichtung.

13. Verfahren gemäß Anspruch 12, wobei die Folie Polycarbonat und/oder Copolycarbonat umfasst.

14. Verwendung des Beschichtungsmittels gemäß mindestens einem der Ansprüche 1 bis 8 oder des Schichtkörpers gemäß mindestens einem der Ansprüche 9 bis 11 zur Herstellung von Kunststoffteilen in film insert molding-Verfahren.

15. Verwendung gemäß Anspruch 14, wobei die Verwendung die Herstellung von Kunststoffteilen für die Auto-, Transport-, Elektro-, Elektronik- und Bauindustrie umfasst.

**Claims**

1. Coating composition comprising

   (a) at least one styrene-acrylonitrile copolymer in a content of at least 30% by weight of the solids content of the coating composition;
   (b) at least 30% by weight of a UV-curable reactive diluent;
   (c) 0.1 to 10 parts by weight of at least one photoinitiator; and
   (d) at least one organic solvent,

   where the proportion of ethylenically unsaturated groups is at least 3 mol per kg of the solids content of the coating composition.

2. Coating composition according to Claim 1, wherein the styrene-acrylonitrile copolymer (a) has an acrylonitrile content in the range of $\geq 20$ and $\leq 30\%$.

3. Coating composition according to Claim 1 or Claim 2, wherein the at least one UV-curable reactive diluent (b) comprises bifunctional, trifunctional, tetrafunctional, pentafunctional or hexafunctional acrylic and/or methacrylic monomers.

4. Coating composition according to Claim 1 or Claim 2, wherein the at least one UV-curable reactive diluent (b) comprises alkoxylated diacrylates and/or dimethacrylates, alkoxylated triacrylates and/or trimethacrylates, alkoxylated tetraacrylates and/or tetramethacrylates, alkoxylated pentaacrylates and/or pentamethacrylates, alkoxylated hexaacrylates and/or hexamethacrylates, aliphatic urethane acrylates, polyester acrylates, polyacryloylacrylates and mixtures thereof.

5. Coating composition according to at least one of the preceding claims, wherein the at least one UV-curable reactive diluent additionally comprises monofunctional monomers in at least 20% by weight of the total proportion of reactive diluent, preferably methyl methacrylate or styrene.

6. Coating composition according to at least one of the preceding claims, wherein the solvent is selected from 1-methoxy-2-propanol, diacetone alcohol, 2,2,3,3-tetrafluoropropanol and mixtures thereof.

7. Coating composition according to at least one of the preceding claims, wherein the solvent comprises diacetone alcohol and/or 1-methoxy-2-propanol.

8. Coating composition according to at least one of the preceding claims, wherein the solvent comprises a mixture of at least 50% by weight of diacetone alcohol and 1-methoxy-2-propanol.

9. Laminate comprising a substrate and a surface coating, obtainable by coating the substrate with a coating composition according to at least one of Claims 1 to 10.

10. Laminate according to Claim 9, wherein the substrate is a film.

**11.** Laminate according to Claim 10, wherein the film comprises polycarbonate and/or copolycarbonate.

**12.** Process for producing a coated film, comprising the steps of:

(i) coating a film with a moulding composition comprising

(a) at least one styrene-acrylonitrile copolymer in a content of
at least 30% by weight of the solids content of the coating composition;
(b) at least 30% by weight of a UV-curable reactive diluent;
(c) 0.1 to 10 parts by weight of at least one photoinitiator; and
(d) at least one organic solvent,

where the proportion of ethylenically unsaturated groups is at least 3 mol per kg of the solids content of the coating composition;
(ii) drying the coating;
(iii) optionally cutting the film to size, delaminating, printing and/or
thermally or mechanically forming the film;
(iv) irradiating the coating with UV radiation to cure the coating.

**13.** Process according to Claim 12, wherein the film comprises polycarbonate and/or copolycarbonate.

**14.** Use of the coating composition according to at least one of Claims 1 to 8 or of the laminate according to at least one of Claims 9 to 11 for production of plastics parts in film insert moulding processes.

**15.** Use according to Claim 14, wherein the use comprises the production of plastics parts for the automotive, transport, electrical, electronics and construction industries.

**Revendications**

**1.** Agent de revêtement, comprenant

(a) au moins un copolymère de styrène-acrylonitrile en une teneur d'au moins 30% en poids des solides de l'agent de revêtement ;
(b) au moins 30% en poids d'un diluant réactif durcissable aux UV (ultraviolet) ;
(c) 0,1 jusqu'à 10 parties en poids d'au moins un photo-initiateur ; et
(d) au moins un solvant organique,

la proportion de groupes éthyléniquement insaturés représentant au moins 3 moles par kg de solides de l'agent de revêtement.

**2.** Agent de revêtement selon la revendication 1, le copolymère de styrène-acrylonitrile (a) présentant une proportion d'acrylonitrile dans la plage de $\geq 20$ et $\leq 30\%$ en poids.

**3.** Agent de revêtement selon la revendication 1 ou la revendication 2, ledit au moins un diluant réactif durcissable aux UV (b) comprenant des monomères acryle et/ou méthacryle bifonctionnels, trifonctionnels, tétrafonctionnels, pentafonctionnels ou hexafonctionnels.

**4.** Agent de revêtement selon la revendication 1 ou la revendication 2, ledit au moins un diluant réactif durcissable aux UV (b) comprenant des diacrylates alcoxylés et/ou des diméthacrylates alcoxylés, des triacrylates alcoxylés et/ou triméthacrylates alcoxylés, des tétraacrylates alcoxylés et/ou des tétraméthacrylates alcoxylés, des pentaacrylates alcoxylés et/ou des pentaméthacrylates alcoxylés, des hexaacrylates alcoxylés et/ou des hexaméthacrylates alcoxylés, des acrylates d'uréthane aliphatiques, des polyesteracrylates, des polyacrylacrylates et des mélanges correspondants.

**5.** Agent de revêtement selon au moins l'une quelconque des revendications précédentes, ledit au moins un diluant réactif durcissable aux UV comprenant de plus au moins 20% en poids, de la quantité totale de diluant réactif, de monomères monofonctionnels, préférablement de méthacrylate de méthyle ou de styrène.

**6.** Agent de revêtement selon au moins l'une quelconque des revendications précédentes, le solvant étant choisi parmi le 1-méthoxy-2-propanol, l'alcool diacétonique, le 2,2,3,3-tétrafluoropropanol et les mélanges correspondants.

**7.** Agent de revêtement selon au moins l'une quelconque des revendications précédentes, le solvant comprenant de l'alcool diacétonique et/ou du 1-méthoxy-2-propanol.

**8.** Agent de revêtement selon au moins l'une quelconque des revendications précédentes, le solvant comprenant un mélange d'au moins 50% en poids d'alcool diacétonique et de 1-méthoxy-2-propanol.

**9.** Corps stratifié, comprenant un substrat et un revêtement de surface, pouvant être obtenu par le revêtement du substrat par un agent de revêtement selon au moins l'une quelconque des revendications 1 à 10.

**10.** Corps stratifié selon la revendication 9, le substrat étant une feuille.

**11.** Corps stratifié selon la revendication 10, la feuille comprenant un polycarbonate et/ou un copolycarbonate.

**12.** Procédé pour la fabrication d'une feuille revêtue, comprenant les étapes de

(i) revêtement d'une feuille par un agent de revêtement, comprenant

(a) au moins un copolymère de styrène-acrylonitrile en une teneur d'au moins 30% en poids des solides de l'agent de revêtement ;
(b) au moins 30% en poids d'un diluant réactif durcissable aux UV ;
(c) 0,1 jusqu'à 10 parties en poids d'au moins un photo-initiateur ; et
(d) au moins un solvant organique,

la proportion de groupes éthyléniquement insaturés représentant au moins 3 moles par kg de solides de l'agent de revêtement ;
(ii) séchage du revêtement ;
(iii) éventuellement rognage, délaminage, impression et/ou formage thermique ou mécanique de la feuille ;
(iv) irradiation du revêtement par un rayonnement UV et ainsi durcissement du revêtement.

**13.** Procédé selon la revendication 12, la feuille comprenant un polycarbonate et/ou un copolycarbonate.

**14.** Utilisation de l'agent de revêtement selon au moins l'une quelconque des revendications 1 à 8 ou du corps stratifié selon au moins l'une quelconque des revendications 9 à 11 pour la préparation d'éléments en plastique selon un procédé de moulage par insert de film.

**15.** Utilisation selon la revendication 14, l'utilisation comprenant la fabrication d'éléments en plastique pour l'industrie automobile, l'industrie des transports, l'industrie électrique, l'industrie électronique et l'industrie de la construction.

# EP 3 008 138 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2113527 A1
- US 2012288706 A
- US 2011171476 A
- US 2009163614 A
- EP 0517044 A
- DE 1031512 B
- US 6228973 B
- WO 2008037364 A
- EP 1582549 A
- WO 2002026862 A
- WO 2005113639 A
- US 4185009 B
- DE 2500092 A
- DE 4240313 A
- DE 19943642 A
- US 5367044 B
- EP 1506249 A
- WO 2004082926 A1
- WO 0207947 A1

**In der Beschreibung aufgeführte Nicht-Patentliteratur**

- **PITTURE ; VERNICI.** *European Coatings,* 2006, vol. 82 (9), 10-19
- **BECK ; ERICH.** Into the third dimension: three ways to apply UV coating technology to 3D-automotive objects. *European Coatings Journal,* 2006, (4), 32, , 34, , 36, , 38-39
- **PETZOLDT ; JOACHIM ; COLOMA ; FERMIN (BMS.** New three-dimensionally formable hardcoat films, JOT. *Journal fuer Oberflaechentechnik,* 2010, vol. 50 (9), 40-42
- **PETZOLDT et al.** Development of new generation hardcoated films for complex 3D-shaped FIM applications. *RadTech Asia 2011, Conference Proceedings,* 2011
- Chemistry & Technology of UV & EB Formulation for Coatings, Inks & Paints. SITA Technology, 1991, vol. 2, 73-123
- *Polyester Acrylates,* 123-135
- **H. SCHNELL.** Chemistry and Physics of Polycarbonates, Polymer Reviews. Interscience Publishers, 1964, vol. 9, 33 ff
- Condensation Polymers by Interfacial and Solution Methods. **PAUL W. MORGAN.** Polymer Reviews. Interscience Publishers, 1965, vol. 10, 325
- Polycarbonate. **DRES. U. GRIGO ; K. KIRCHER ; P. R- MÜLLER.** Kunststoff-Handbuch, Band 3/1, Polycarbonate, Polyacetale, Polyester, Celluloseester. Carl Hanser Verlag, 1992, vol. 3/1, 118-145
- Encyclopedia of Polymer Science. 1969, vol. 10
- **H. SCHNELL.** Chemistry and Physics of Polycarbonates, Polymer Reviews. John Wiley and Sons, Inc, 1964, vol. 9
- **FRIEDRICH JOHANNNABER ; WALTER MICHAELI.** Handbuch Spritzgießen. Hanser, 2001
- **MENGES ; MICHAELI ; MOHREN.** Anleitung zum Bau von Spritzgießwerkzeugen. Hanser, 1999